Europäisches Patentamt

**European Patent Office**

**Office européen des brevets**

(11) Numéro de publication: **0 250 336 B1**

(12) **FASCICULE DE BREVET EUROPEEN**

(45) Date de publication de fascicule du brevet: **22.07.92** (51) Int. Cl.⁵: **D04H 11/04**

(21) Numéro de dépôt: **87420134.6**

(22) Date de dépôt: **20.05.87**

(54) **Procédé de fabrication de revêtements textiles soudés par ultrasons, dispositif pour sa mise en oeuvre.**

(30) Priorité: **22.05.86 FR 8607842**

(43) Date de publication de la demande:
**23.12.87 Bulletin 87/52**

(45) Mention de la délivrance du brevet:
**22.07.92 Bulletin 92/30**

(84) Etats contractants désignés:
**AT BE CH DE ES FR GB GR IT LI LU NL SE**

(56) Documents cités:
**EP-A- 0 081 460**
**US-A- 2 639 250**

(73) Titulaire: **SOMMER S.A.**
**4 rue Benjamin Constant**
**F-92521 Neuilly sur Seine(FR)**

(72) Inventeur: **Hiver, Jean**
**35 Grande Rue Ville sur Lumes**
**F-08440 Vivier au Court(FR)**

(74) Mandataire: **Maureau, Philippe et al**
**Cabinet Germain & Maureau Le Britannia -**
**Tour C 20, bld Eugène Déruelle**
**F-69003 Lyon(FR)**

Rank Xerox (UK) Business Services

## Description

La présente invention concerne un procédé de fabrication de revêtements textiles soudés par ultra-sons, le dispositif destiné à la mise en oeuvre de ce procédé et les produits obtenus.

Le EP-B-0 081 460 de la Demanderesse décrit un procédé pour recouvrir un substrat de fils soudés par ultra-sons, ces fils et ce substrat étant au moins partiellement en matériau thermoplastique, selon lequel on place ce substrat vis-à-vis d'une sonotrode de soudage, on amène des portions desdits fils en contact avec la portion de ce substrat placée vis-à-vis de cette sonotrode, on presse ces portions de substrat et de fils en contact contre la sonotrode reliée à une source d'excitation pour leur transmettre les variations de pressions ultrasoniques aptes à créer entre elles une fusion localisée et on relâche cette pression pour déplacer le substrat et effectuer un soudage d'une autre portion de ces fils sur une autre portion de sa surface et ainsi de suite jusqu'à recouvrement du substrat. Selon ce procédé, on dispose ladite sonotrode adjacente au revers du substrat, on fait passer chacun desdits fils à travers un conduit de guidage, dont l'extrémité de sortie est adjacente à une surface d'appui faisant face à la sonotrode, on anime ces conduits de guidage de mouvements alternatifs selon une direction sensiblement perpendiculaire à la face de transmission des vibrations de la sonotrode et l'on amène ces surfaces d'appui périodiquement en contact élastique avec la portion de l'avers du substrat passant sur ladite face de transmission de vibration de la sonotrode afin d'appliquer cette portion du substrat et celle de chacun desdits fils sortant des extrémités respectives desdits conduits contre ladite sonotrode.

La machine prévue pour la mise en oeuvre de ce procédé, également décrite dans le EP-B-0 081 460, comprend des moyens pour faire défiler le substrat, une matrice de conduits de guidage de fils, cette matrice de conduits de guidage étant disposée transversalement à la direction de défilement de ce substrat et étant en prise avec des moyens de guidage définissant une translation de cette matrice et avec des moyens d'entraînement pour l'animer d'un mouvement de va-et-vient par rapport aux moyens de guidage et amener successivement les extrémités de sortie des conduits de guidage à proximité d'une portion du substrat, et un poste de soudage comprenant une sonotrode et des moyens d'appui, qui sont disposés de part et d'autre de cette portion du substrat, et des moyens d'excitation de cette sonotrode pour la faire vibrer à une fréquence acoustique apte à chauffer le matériau thermoplastique à sa température de fusion, lorsqu'il est pressé entre cette sonotrode et ces moyens de support ; dans cette machine, ces moyens de guidage en translation sont orientés perpendiculairement à la surface d'application des vibrations acoustiques de la sonotrode ; lesdits moyens d'appui sont formés de surfaces d'appui situées à proximité immédiate des extrémités de sortie desdits conduits de guidage respectifs, qui sont montés sur ladite matrice par l'intermédiaire d'éléments élastiques de suspension agissant au moins dans le sens de course de la matrice amenant ces surfaces d'appui contre la surface de transmission des vibrations de la sonotrode.

Ce procédé et la machine pour sa mise en oeuvre présentent de nombreux avantages ; ils permettent notamment de choisir individuellement sur le substrat les zones de soudage de chaque fil, ce qui permet de réaliser un tapis "tufté", dont l'aspect ne diffère en rien des tapis tuftés obtenus par des moyens classiques mais qui peut être obtenu avec une économie de matière première que l'on peut évaluer à environ 20 %. Il faut toutefois noter que ce procédé entraîne une étroite interdépendance entre la hauteur de boucle, la pression et le temps de soudure.

On connaît, par ailleurs, d'après le GB-A- 2 158 109 un procédé de fabrication de tapis selon lequel on fixe, sur un substrat recouvert d'adhésif, des fils, ces fils étant forcés au moyen d'air comprimé dans des conduits de guidage.

Selon ce procédé, le fil est guidé et conduit de façon verticale jusqu'à la couche d'adhésif, dans laquelle il est implanté.

Dans ce procédé, ainsi que dans le procédé décrit dans le EP-B-0 081 460, le point d'implantation des fils sur le support est commandé par la localisation de l'orifice d'amenée desdits fils.

Au cours de nombreuses études visant à perfectionner tant le procédé que la machine décrits dans le EP-B-0 081 460, la Demanderesse a déterminé qu'il serait bon de pouvoir modifier la disposition et le mode de fonctionnement de certains élements, afin d'obtenir un procédé et un dispositif plus souple, et qui permettre d'obtenir, sans modification importante de la machine, des revêtements à velours bouclé ou des revêtements à velours coupé.

C'est ainsi qu'elle a déterminé tout l'intérêt qu'il y aurait à dissocier la fonction guide-fils et la fonction soudure par ultra-sons, tout en modifiant profondément la disposition des moyens d'amenée et de guidage du fil, pour éviter le processus difficile d'enfilage des fils dans une matrice de tubes guide-fils, cause de frottements importants dudit fil, tout en facilitant la formation des boucles.

A cet effet, l'invention a pour premier objet un procédé de fabrication en continu d'un revêtement textile présentant une surface velours selon lequel on assure la solidarisation par fusion acoustique de fils à un substrat, l'un au moins de ces éléments étant thermoplastique, avec amenée du substrat dans une zone de soudage, alimentation des fils au substrat, formation de boucles sur les fils et fixation de la base des boucles de fils au substrat selon une implantation déterminée par la localisation des têtes de soudage, le procédé étant caractérisé en ce que l'alimentation des fils au substrat est assurée indépendamment de l'opération de soudage, et en ce que lesdits fils sont soumis, avant ladite opération de soudage, à l'action de jets d'air comprimé destinés à la formation des boucles, l'air injecté étant chauffé.

Selon un mode de réalisation du procédé, l'action des jets d'air comprimé s'exerce indépendamment du processus de guidage du fil vers le substrat.

Selon un autre mode de réalisation, l'action des jets d'air comprimé est liée au processus de guidage des fils vers le substrat.

Selon un mode de réalisation du procédé selon l'invention plus spécialement destiné à la réalisation de velours coupé, il est prévu immédiatement avant solidarisation de la base des boucles et du substrat, une opération de découpe du fil en synchronisation avec l'opération de soudure.

L'invention a également pour objet un dispositif pour la mise en oeuvre du procédé selon l'invention, qui comporte des moyens pour amener le substrat dans la zone de soudage, des moyens d'alimentation et de guidage d'une nappe de fils jusqu'à ladite zone de soudage, un poste de soudage acoustique comprenant une sonotrode disposée à l'envers du substrat et des têtes de soudage disposées de l'autre côté du substrat, ainsi que des moyens d'excitation de cette sonotrode pour la faire vibrer à une fréquence acoustique apte à porter le matériau thermoplastique a sa température de fusion lorsqu'il passe entre ladite sonotrode et lesdites têtes de soudage, la position des têtes de soudage déterminant le point d'implantation sur le substrat des boucles de fil fourni par les moyens d'alimentation et de soudage, caractérisé en ce que les moyens pour conduire la nappe de fils dans la zone de soudage sont indépendants des moyens de soudage, en ce qu'un dispositif d'injection pneumatique est prévu à l'arrière des têtes de soudage pour assurer la formation des boucles, le canal de passage du fil et le dispositif d'injection pneumatique étant réunis en un même élément injecteur assurant la propulsion du fil et la formation de la boucle, et en ce que des moyens sont prévus pour le chauffage de l'air injecté.

Selon un mode de réalisation de l'invention, l'alimentation du fil sous les têtes de soudage se fait sensiblement tangentiellement au substrat.

Un dispositif de coupe, animé d'un mouvement vertical alternatif, est avantageusement disposé à la sortie du dispositif d'injection, en amont des têtes de soudage, permettant une coupe de la boucle de fil simultanément à sa solidarisation sur le substrat.

La présente invention sera mieux comprise et ses avantages ressortiront bien à l'aide de la description qui suit de différents modes de réalisation de l'invention, en référence au dessin schématique annexé dans lequel :

Figure 1 est une vue en coupe longitudinale d'un premier mode de réalisation du dispositif selon l'invention pour la fabrication de velours bouclé ;

Figures 2 à 7 explicitent les positions relatives des principaux éléments de figure 1 au cours d'un cycle de travail ;

Figure 8 est une vue en coupe d'un mode particulier de guidage des enclumes ;

Figure 9 est une vue en coupe selon IX-IX de figure 8 du bloc pouvant recevoir les têtes d'enclume disposées en quinconce ;

Figure 10 est une vue en coupe longitudinale d'un deuxième mode de réalisation du dispositif selon l'invention ;

Figure 11 est une variante au mode de réalisation représenté à la figure 10 ;

Figure 12 est une vue de dessus de la partie de la figure 11 représentant les têtes d'enclume et les cloisons ;

Figure 13 est une vue en coupe longitudinale d'un troisième mode de réalisation du dispositif selon l'invention pour la fabrication de velours coupé ;

Figure 14 est une variante du mode de réalisation représenté à la figure 13 ;

Figure 15 est une variante du mode de réalisation représenté à la figure 13, pour la fabrication de velours coupé à dessins ;

Figures 16 à 18 explicitent les positions relatives des organes de coupe et de soudure des figures 13 à 15 au cours d'un cycle de travail ;

Figures 19 à 21 sont des vues en coupe représentant différents formes du trou de l'injecteur ;

Figures 22 et 23 sont des vues de dessous de diverses dispositions relatives des têtes d'enclume ;

Figure 24 est une vue en coupe d'un système d'avance du fil ;

Figure 25 est une vue en coupe d'un deuxième système d'avance du fil ;

Les figures 26 à 29 sont des schémas des différentes phases de fonctionnement du système représenté à la figure 25.

Figure 30 est une vue en coupe d'un troisième système d'avance du fil avec sélection applicable dans le mode de réalisation représenté à la figure 15.

Sur les figures, le fil est représenté par 1, le substrat par 2 et la sonotrode de soudage par 3.

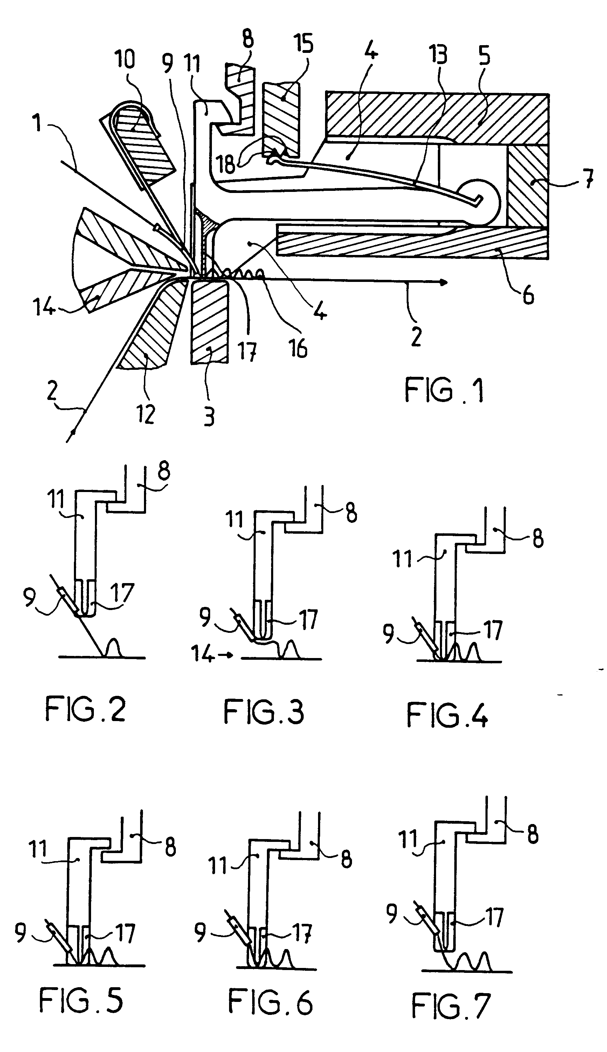

Le mode de réalisation décrit à la figure 1 est plus spécialement adapté à la fabrication de velours bouclé.

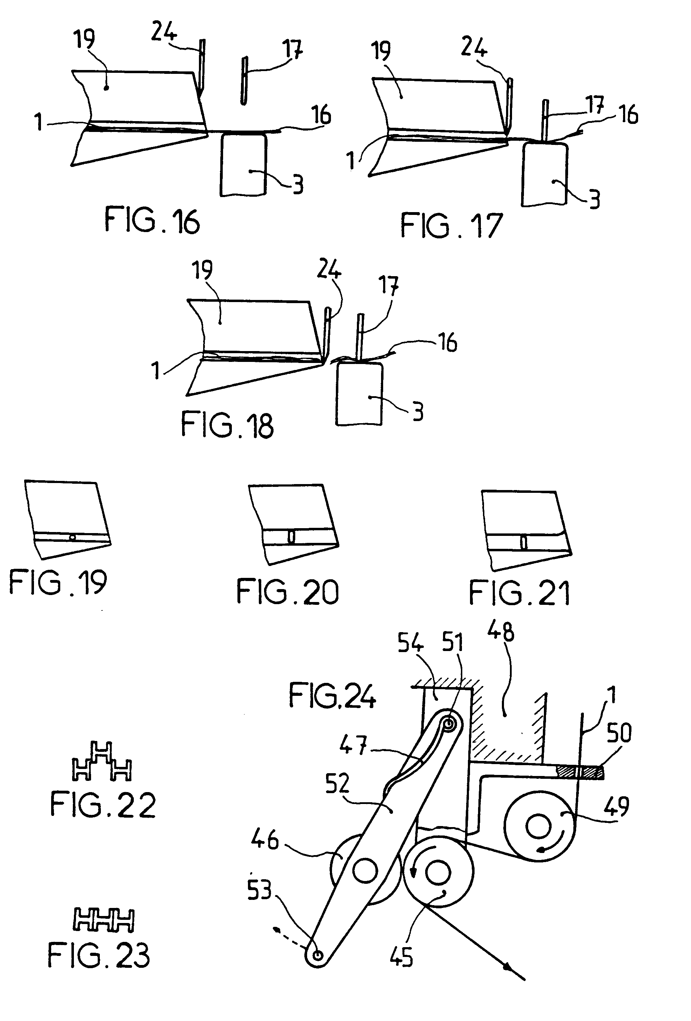

La nappe de fils 1 est alimentée au dispositif selon l'invention depuis un cantre (non représenté) par un système d'avance du fil, non représenté à la figure, mais dont plusieurs modes de réalisation seront décrits plus loin en détail en référence aux figures 24 à 30.

Ce système d'avance est conçu pour assurer une alimentation du fil totalement indépendante du système de soudage.

Le fil 1 traverse le guide-fil 9, celui-ci étant guidé latéralement par la tête 17 de l'enclume 11. Le substrat 2 est alimenté par un dispositif de déroulage (non représenté). Il glisse sur la règle de détour 12, avant de passer au-dessus de la sonotrode 3 et d'être tiré par un rouleau d'avance (non représenté) synchronisé avec le mouvement de la machine.

La sonotrode 3 est reliée à un générateur de vibrations comprenant notamment un transducteur ultrasonore et, de façon avantageuse, un adaptateur d'amplitude de vibration.

Le substrat 2 est une feuille support, généralement constituée par un non-tissé ou un tissu au moins partiellement en matériau thermoplastique, sur laquelle des boucles doivent être soudées pour former un tapis velours.

Les fils 1 sont, au moins partiellement, thermoplastiques.

Une buse de soufflage d'air 14 permet d'assurer la formation de la boucle 16 sur l'arrière de la tête d'enclume 17. D'une façon préférentielle, on peut chauffer l'air de soufflage, ce qui permet, d'une part, d'assouplir le fil 1 et de faciliter la formation de la boucle 16, d'autre part, de préchauffer le fil 1, le substrat 2 et de maintenir en température la tête d'enclume 17 et l'extrémité de la sonotrode 3.

Dans ces conditions, il est possible de réduire sensiblement le temps de soudure et donc d'augmenter la vitesse de production.

Ensuite, et dans une opération indépendante de l'avance du fil 1, la tête 17 de l'enclume 11 soude le fil 1 sur le substrat 2 grâce à la sonotrode 3, la pression de contact nécessaire étant assurée par le ressort 13 s'appuyant sur la barre 15.

Les enclumes 11 sont guidées latéralement par les cloisons 4 et positionnées longitudinalement par la bosse du ressort 13 qui s'appuie dans l'une des encoches 18 de la barre 15. Cette disposition permet de placer chaque enclume en position "Avant" ou "Arrière", et donc de faire des points de soudure en ligne ou en quinconce, selon l'effet désiré.

La pression de soudure est donnée par la position de la barre 15, réglable verticalement par rapport à la position basse de l'enclume. Cette barre 15 peut être immobile ou, dans un mode de réalisation préférentiel, liée au mouvement vertical de la barre de relevage 8. Cette dernière disposition permet au ressort 13 de travailler de façon quasi statique à la valeur de précontrainte désirée et d'éviter un surcroît de compression lors de la remontée de l'enclume 11, le résultat étant une augmentation notable de la durée de vie du ressort 13.

Les cloisons 4 sont positionnées dans des rainures du bloc porte-cloisons formé d'une partie supérieure 5 et d'une partie inférieure 6 reliées par le bloc entretoise 7.

La barre de relevage 8, animée d'un mouvement vertical alternatif, assure le déplacement des enclumes 11, tandis que la barre rainurée 10 assure le positionnement et le mouvement vertical alternatif des guide-fils 9, ces deux mouvements étant synchronisés.

Les positions relatives du guide-fil 9, de l'enclume 11 et de la boucle 16 formée par le jet d'air au cours d'un cycle de travail vont maintenant être décrites de façon schématique en référence aux figures 2 à 7.

Au départ (Figure 2), l'enclume 11 et la barre de relevage 8 sont au point mort haut. Le guide-fil 9 est en position haute.

En une deuxième phase (figure 3), ces trois éléments descendent, le guide-fil 9 prenant une légère avance sur l'enclume 11 pour dégager le fil de tout obstacle pouvant nuire à la formation de la boucle 16. Le fil 1 est soufflé par le jet d'air pour former la boucle 16 en arrière de la tête d'enclume 17.

A la troisième phase (figure 4) commence la soudure. Le guide-fil 9 et l'enclume 11 sont en position basse, la pression atteint sa valeur nominale. Dès que le fil 1 est pincé par la tête d'enclume 17, le guide-fil 9 peut commencer à remonter.

A la quatrième phase (figure 5), la barre de relevage 8 atteint son point mort bas en surcomprimant le ressort d'une valeur $\Delta P$. La pression effective de soudure est donc la valeur nominale P, réglable, à laquelle s'ajoute la valeur constante $\Delta P$ qui correspond à la course de dégagement de la barre de relevage 8.

On détermine de préférence les courses de différents éléments de façon que P soit faible devant P, par exemple dans un rapport de 1 à 10 ou 1 à 15.

A la cinquième phase (figure 6), la barre de relevage 8 commence à remonter. La pression de soudure redescend à sa valeur nominale P.

Enfin (figure 7), la barre de relevage 8 remonte l'enclume 11, la pression de soudure redevient nulle, la soudure est terminée, l'enclume quitte le substrat. Celui-ci peut alors avancer, son mouvement devant être achevé avant le retour à la troisième phase.

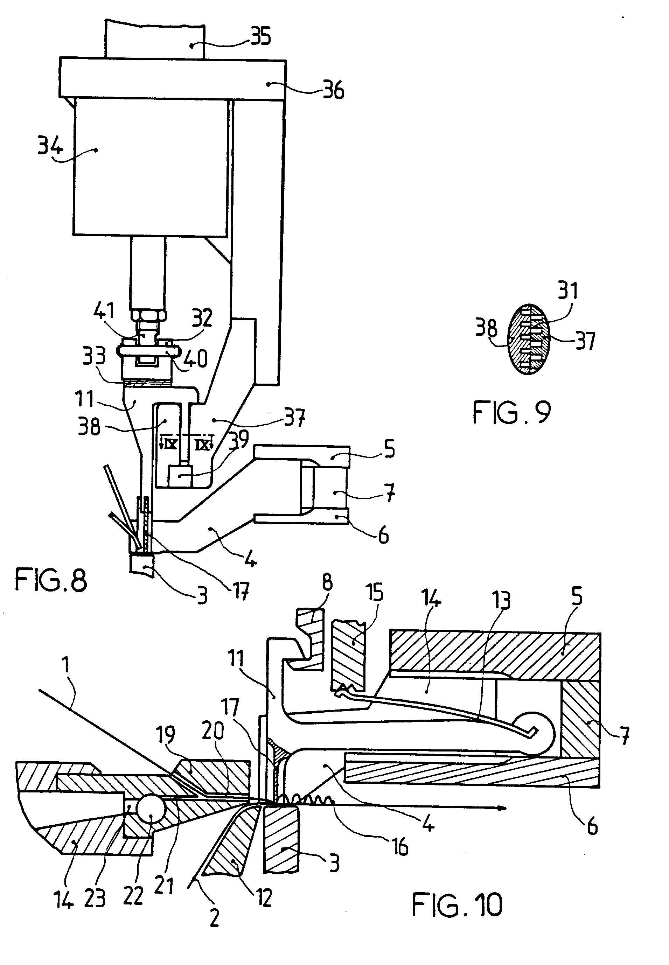

On voit, aux figures 8 et 9, un autre mode d'exécution du dispositif de guidage des enclumes selon lequel les enclumes 11 sont guidées par leur partie arrière 31 dans les blocs de guidage 37 et 38 reliés par une entretoise 39, cet ensemble formant la barre de relevage 8 fixée sur la traverse 36. Cette traverse 36 est reliée aux tiges de commande 35 qui assurent le mouvement vertical.

La pression de soudure est donnée par la barre de compression 32 appuyant sur la partie supérieure des enclumes 11 par l'intermédiaire de l'amortisseur 33. La barre de compression 32 est reliée à un vérin 34 par l'intermédiaire de l'axe 40 et de la tige 41 vissée dans la tige du vérin 34.

Cette disposition permet d'assurer une pression constante sur toutes les enclumes 11, les différences de hauteur entre les enclumes dûes aux variations d'épaisseur du fil et/ou du substrat et aux tolérances de fabrication étant absorbées par l'amortisseur 33. Cette disposition offre les avantages suivants :

- homogénéité de la pression sur les enclumes meilleure qu'avec des ressorts ;
- suppression de la pointe de pression dûe à la course de dégagement de la barre de relevage 8 et de la barre d'appui 10 ;
- possibilité de réglage en marche à partir d'une commande centralisée.

La barre de compression 32 est réalisée en plusieures parties indépendantes, chacune reliée à deux vérins 34, ce qui permet une construction isostatique dégagée de tout effort parasite.

Le démontage des enclumes s'effectue en relevant les vérins et en sortant les enclumes par la haut.

Comme dans le mode de guidage décrit en référence à la figure 1, les têtes d'enclume 17 coulissent entre les cloisons 4 qui empêchent le fil 1 d'échapper à la soudure.

On voit, à la figure 9, une vue de détail du bloc 37,38 prévu pour recevoir dans des évidements disposés en quinconce la partie arrière 31 des enclumes 11.

Dans le mode de réalisation du dispositif selon l'invention représenté à la figure 10, les fonctions soufflage d'air et guidage du fil ont été regroupées en un seul élément 19 qui sera dénommé dans ce qui suit injecteur.

L'injecteur 19 est fixé sur la buse d'alimentation 14. L'air comprimé de la buse 14 sort de cette buse par les canaux d'alimentation 23, la pression étant rééquilibrée dans le sens transversal par la chambre de répartition 22.

A chaque fil 1 correspond un ajutage 21 amenant l'air de la chambre de répartition 22 au canal d'amenée de fil 20. Le changement de section de veine d'air au sortir de l'ajutage 21 crée une dépression à l'entrée du canal 20 qui aspire le fil 1. Ce fil 1 est ensuite propulsé par le jet d'air qui sort de l'ajutage 21 jusqu'à l'arrière de la tête d'enclume 17 où il forme la boucle 16.

La recherche du meilleur rendement aérodynamique du jet d'air a conduit à la réalisation préférentielle représentée où la trajectoire rectiligne est celle de l'air plutôt que du fil.

La taille et la forme des canaux 20 sont fonction entre autres de la grosseur du fil 1 et du nombre de fils sur la largeur du produit, comme on le verra plus loin, en référence aux figures 19 à 21.

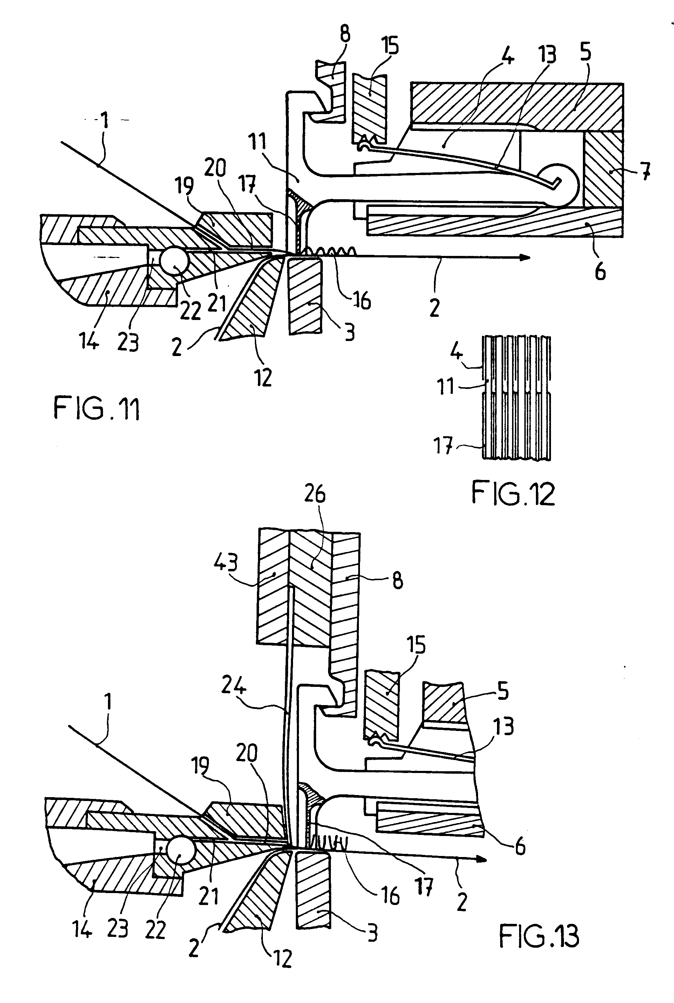

Dans la variante de réalisation représentée aux figures 11 et 12, on a supprimé la partie des cloisons 4 utilisée pour le guidage du fil 1 sous les têtes d'enclume.

Ces cloisons sont alors élargies jusqu'à se toucher, afin que le fil 1 ne puisse pas échapper à la soudure. Un léger jeu fonctionnel est toutefois ménagé entre les têtes d'enclume 17 pour permettre leur mouvement relatif. Il est évident que si les cloisons 4 peuvent être totalement supprimées dans le cas du mode de réalisation de la figure 8, elles devront être partiellement conservée dans le cas du mode de réalisation de la figure 1, où elles assurent le guidage latéral des enclumes 11 et des ressorts 13.

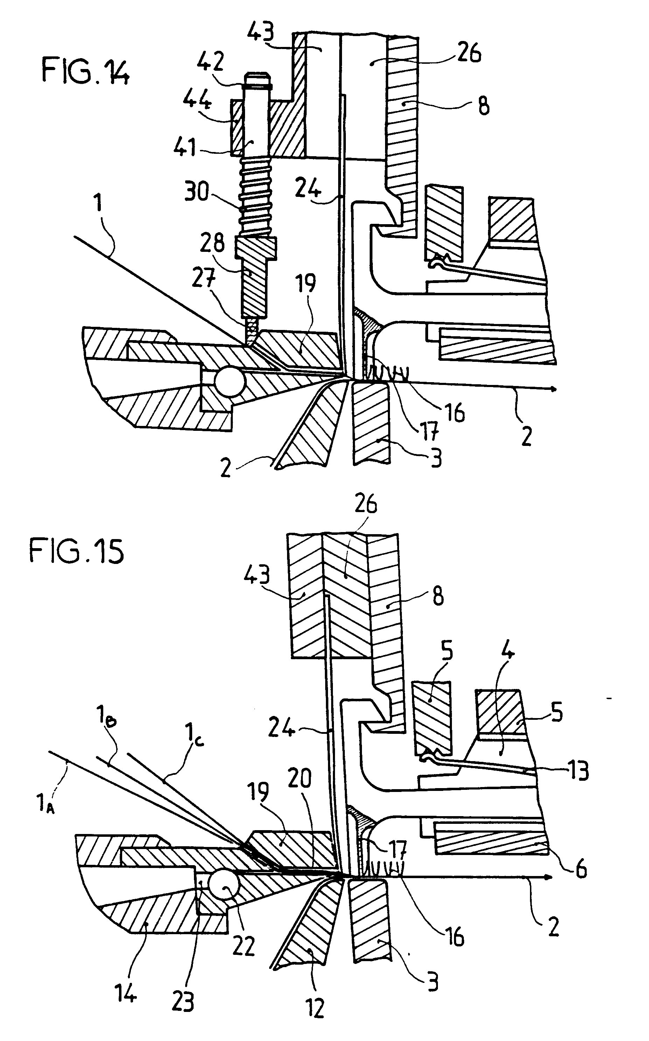

Les modes de réalisation représentés aux figures 13 à 15 sont adaptés à la fabrication de velours coupé grâce à l'adjonction d'un moyen de coupe à la sortie de l'injecteur 19.

Dans le mode de réalisation représenté à la figure 13, le fil 1 sortant de l'injecteur 19 est pincé sous la tête d'enclume 17. Le couteau 24 porté par le bloc 26 animé d'un mouvement vertical alternatif glisse sur la face avant 25 de l'injecteur 19 et coupe le fil 1. La boucle 16 est formée par la longueur de fil 1 délivrée par le système de tirage du fil (non représenté), et soudée en son milieu.

Dans ce mode de réalisation, les têtes d'enclumes doivent être disposées en ligne et non plus en quinconce afin que tous les brins avant et arrière des boucles 16 soient égaux. La hauteur de boucle est obtenue en ajustant la distance entre la sortie de l'injecteur 19 et le point de soudure.

Dans le mode de réalisation représenté à la figure 14, il est prévu un dispositif tampon 27 destiné à empêcher le fil 1 de sortir du canal 20 lors de l'obturation de celui-ci par le couteau 24.

En effet, lors de l'emploi de certains fils irréguliers ou assez volumineux, on peut être amené à augmenter la pression d'air comprimé dans la buse 14, et donc le débit dans le canal 20, pour entraîner le fil plus facilement. A ce moment, si la section de passage de l'air entre la face avant 25 et le couteau 24 n'est pas suffisante, l'air a tendance à ressortir à contre-sens par l'arrière du canal 20, ce qui a pour conséquence d'entraîner le fil hors de ce canal à la fin de la coupe.

Le tampon élastique 27 monté sur la règle 28 obture l'entrée du canal 20 et bloque le fil 1. De cette façon, l'air ne peut s'échapper que vers l'avant entre le couteau 24 et la face avant 25.

La règle 28 montée sur les colonnes de guidage 29 est liée au bloc porte-couteaux 26 dans son mouvement vertical. Les ressorts 30 absorbent la différence de course entre le tampon 27 qu'ils plaquent contre l'injecteur 19 et le bloc porte-couteaux 26. La remontée du tampon 27 est assurée par les arrêtoirs 42 des colonnes 29.

Le dispositif représenté à la figure 15 est prévu pour la fabrication de velours coupé à dessins.

Dans ce but, plusieurs fils 1a, 1b, et 1c de nature et/ou de coloration différente, sont introduits dans chaque canal 20.

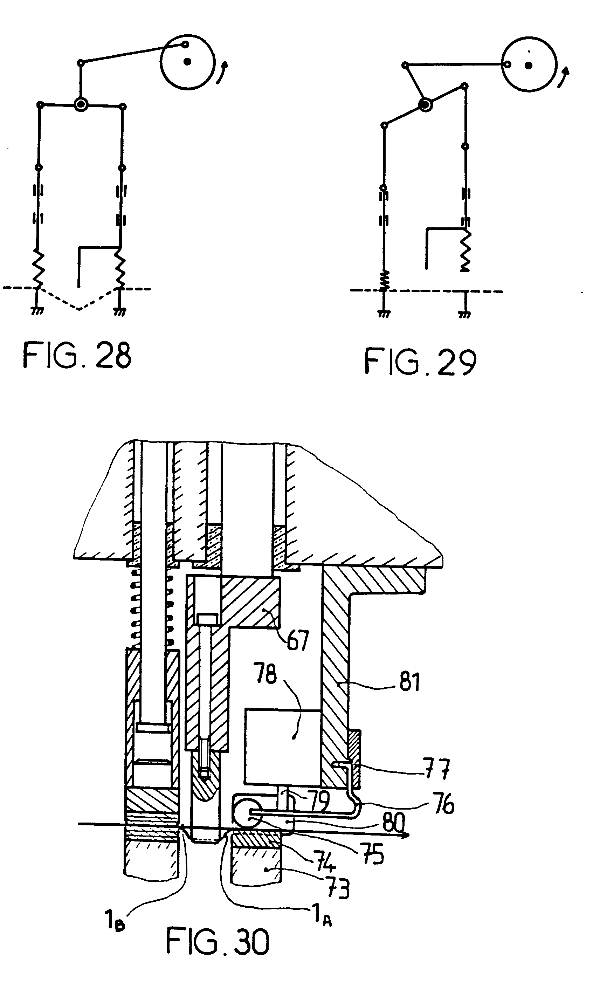

En sélectionnant à chaque cycle, comme il sera expliqué plus en détail en référence à la figure 30, l'avance de l'un seul des fils 1 présents dans le canal 20, on peut, en effet, obtenir un velours à dessin.

Le fil sélectionné est délivré et soudé, alors que les autres restent en place dans le canal 20. On peut de la même façon sélectionner plusieurs fils à la fois pour augmenter les possibilités d'effet.

La programmation des fils peut être obtenue par un système de type Jacquard, soit mécanique, de façon traditionnelle, soit électronique selon les procédés récemment développés. Dans ce dernier cas, il est possible de se raccorder à un système informatique comprenant par exemple une banque de dessins et des logiciels de création de dessin.

On voit, sur les figures 16 à 18, les positions relatives du couteau et de la tête de soudage lors de l'opération de coupe du fil.

Le couteau 24 et la tête 17 commencent à descendre (figure 16).

En une deuxième phase (figure 17), la tête d'enclume 17 pince le fil 1, le couteau 24 obture partiellement le canal 20 de façon que le fil 1 occupe la section restée libre, le jet d'air étant dévié vers le haut entre le couteau 24 et la face avant 25 de l'injecteur 19. Cette disposition permet de pincer le fil 1 alors que le jet d'air est pratiquement coupé, et donc de faciliter le placement du fil sous l'enclume sans perturbations aérodynamiques.

Enfin, (figure 18), pendant la soudure, le couteau 24 continue sa course et sépare le brin de fil qui forme la boucle 16.

On voit aux figures 19 à 21 quelques formes et sections du canal 20 de passage du fil.

La section ronde représentée à la figure 19 est la plus facilement réalisable. La section oblongue représentée à la figure 20 permet le passage de plusieurs fils.

Enfin, (figure 21), une augmentation de la section de sortie vers le haut favorise le passage de l'air pendant l'obturation par le couteau et évite ainsi le rejet du fil vers l'arrière.

On voit, sur les figures 22 et 23, la disposition de têtes d'enclume en forme de H, respectivement en quinconce et en ligne, quand la partie des cloisons utilisée pour le guidage du fil a été partiellement supprimée ; dans le cas où les cloisons sont maintenues, les têtes seront bien évidemment plus éloignées les unes des autres. La forme en H représentée au dessin est utilisée préférentiellement avec les guide-fils représentés en figure 1, qui sont ainsi guidés entre les ailes avant du H.

Les têtes d'enclume peuvent également présenter une forme en U ou être plates et sont alors plus spécialement adaptées pour utilisation avec un injecteur pneumatique.

Différents systèmes de tirage du fil vont maintenant être décrits en référence aux figures 24 à 30.

Dans le système de tirage représenté à la figure 24, le fil 1 provenant du cantre (non représenté) passe dans une barre 50 percée de trous de guidage, ce qui empêche les fils de se chevaucher lors du passage dans les rouleaux. Un rouleau motorisé 49 aide au tirage d'une part et sert, d'autre part, de détour pour augmenter la longueur de fil en contact sur le rouleau d'entraînement principal 45. Ce rouleau d'entraînement principal 45, monté sur des bras 54, détermine la longueur de fil délivrée à chaque cycle de la machine. Il peut être actionné soit par un moteur indépendant du moteur principal, soit grâce à une transmission reliée au mouvement principal (non représentés). Dans le cas où l'on désire une avance des fils discontinue, par exemple d'une façon préférentielle dans le velours, il peut être actionné par un moteur pas-à-pas ou par une boîte à indexage reliée au mouvement principal (non représentés).

Le rouleau presseur 46 applique le fil 1 sur le rouleau principal 45 et supprime ainsi le glissement entre le fil 1 et le rouleau 45. Ce rouleau presseur 46 est monté libre entre les bras 52, eux-mêmes pivotant autour de l'axe 51 monté dans les bras 54. Le ressort 47 assure la pression nécessaire entre les rouleaux 45 et 46. Lors du montage des fils, le rouleau 46 peut être soulevé pour introduire les fils grâce à la tige 53 montée entre les bras 52. Les rouleaux 45 et 46 sont caoutchoutés, d'une part pour augmenter l'adhérence du fil 1 et, d'autre part, pour éviter de détériorer le fil par écrasement.

Quel que soit le mode d'alimentation choisi (en continu ou en discontinu), le rouleau 49 tourne en permanence, d'une façon préférentielle à une vitesse périphérique supérieure à celle du rouleau 45. De cette manière, les efforts de tirage des fils sont principalement encaissés par le rouleau 46, le rouleau 45 n'ayant plus qu'une fonction de délivrage précis de la longueur de fil désirée.

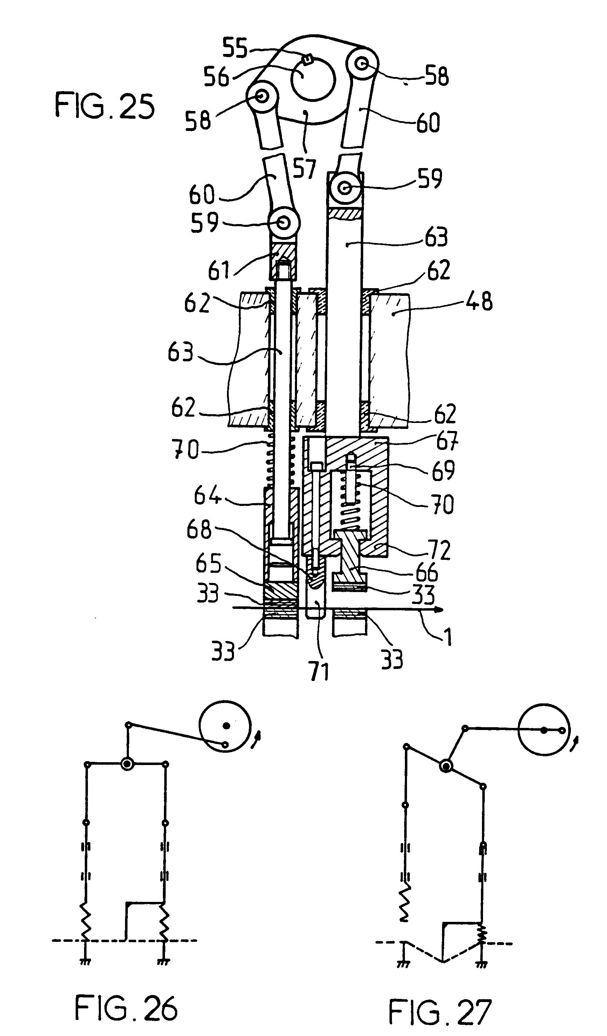

Le système représenté à la figure 25 est prévu pour réaliser l'avance du fil de façon discontinue. Comme on le voit sur la figure, l'arbre oscillant 56 reçoit son mouvement par un excentrique lié au mouvement principal (non représentés). Il porte un plateau 57 immobilisé en rotation par la clavette 55 et les axes de tête de bielle 58 où viennent s'ancrer les bielles 60. L'une des bielles 60 est reliée par l'axe 59 et la chape 61 à la tige 63, l'autre à la deuxième tige 63. Les tiges 63 coulissent dans les bagues 62 montées sur le bâti 48. La tige 63 arrière (AR) coulisse dans le bloc de coulissage AR 64 qui porte également la barre de pressage AR 65. La tige 63 avant (AV) porte quant à elle la traverse 67, sur laquelle sont fixés la barre d'appui 68 et les goujons 69 qui guident les ressorts 70. La barre de pressage AV 66 coulisse verticalement dans le guidage 72 de la traverse 67, les ressorts 70 assurant le pressage de ces deux pièces.

Les lamelles 71 montées sur la barre d'appui 68 guident les fils et les empêchent de se chevaucher lors du cycle de fonctionnement. Les amortisseurs 33 montés sur les parties de pressage du fil évitent la détérioration du fil 1 dans les phases de pressage.

Les figures 26 à 29 sont des schémas illustrant les différentes phases de fonctionnement du système de tirage et d'avance de fil représenté à la figure 25

A 0°, phase 1 (figure 26), la barre de pressage AR 65, la barre d'appui 68 et la barre de pressage AV 66 sont au même niveau. Le bloc de coulissage AR 64 est en butée sur l'extrémité de la tige AR 63, la barre de pressage AV 66 en butée dans la traverse 67. Le fil est maintenu du côté cantre (entrée) et du côté sortie.

A 90°, phase 2 (figure 27), la barre de pressage AR 65 est levée, la barre d'appui 68 est en position basse, tandis que la barre de pressage AV 66 est plaquée par les ressorts 70 sur les appuis du bâti. Le fil est donc maintenu du côté sortie et libre du côté cantre (entrée). La barre d'appui tire une longueur de fil déterminée par la course et l'écartement des appuis du bâti.

A 180°, phase 3 (figure 28), le système est revenu à la même position qu'à la phase 1 (0°) à ceci près que la longueur de fil tirée est emmagasinée entre les appuis. Le fil est alors détendu.

Enfin à 270°, phase 4 (figure 29), c'est-à-dire à la position représentée à la figure 25, la barre de pressage AV est levée, ainsi que la barre d'appui, le fil est appelé par la machine. La barre de pressage AR pince le fil, le ressort 70 absorbant la course de la tige 63.

Enfin, un système d'avance du fil en discontinu avec sélection du fil est représenté à la figure 30. Dans l'essentiel, le système correspond à celui décrit en référence à la figure 25, la barre de pressage AV 66 étant remplacée par un système programmable. Le presseur 75 est monté sur un ressort 76 qui tend à la soulever et donc à libérer le fil. Ce mouvement naturel est contrarié par la tige 79 de l'électro-aminant 78 qui, lorsque le courant passe, appuie sur le ressort 76 qui maintient le presseur 75 en pression sur l'appui 74 fixé sur la partie de bâti correspondante 73.

L'ensemble est guidé latéralement par les cloisons 80 fixées sur l'appui 74 qui est rainuré.

Le ressort 76 est positionné dans la pièce de fixation 81 alors que le chapeau 77 le maintient en position. La traverse 67, de la même façon que précédemment, supporte la barre d'appui 68.

Le fonctionnement est le même que précédemment, à ceci près que le presseur 75 est commandé par l'électro-aimant 78. Il est donc possible, en maintenant le courant dans l'électro-aimant, d'empêcher le fil d'être appelé par la machine. C'est le cas du fil 1a, alors que le fil 1b a été appelé normalement.

Il ressort bien de la description qui précède que l'invention permet d'obtenir, par soudure ultrasonique de fils sur un substrat, un revêtement en velours bouclé, en ligne ou en quinconce ou un revêtement en velours coupé, et ceci sur le même dispositif puisqu'il suffit d'ajouter au dispositif classique un moyen de coupe ou de mettre en service un moyen de coupe pour passer d'un velours bouclé à un velours coupé.

La lame de soudure (tête d'enclume) étant modulaire, elle pourra facilement s'adapter à un éventuel désalignement vertical entre sonotrodes et aux hétérogénéités des fils et du support.

Il faut souligner, par ailleurs, la simplicité mécanique du dispositif selon l'invention qui assure un réglage simple de la pression de soudure et de la hauteur du poil ; un changement de jauge s'effectue sans difficulté par simple changement de l'injecteur et du jeu de couteaux.

Il ne se pose plus de problèmes d'enfilage comme c'était le cas avec les matrices guide-fils puisque le fil est aspiré par l'injecteur.

Il faut enfin noter qu'il est possible d'obtenir un produit à dessin en bouclé en jouant sur la forme de la ligne de soudure sur la largeur du produit, c'est-à-dire en disposant les têtes d'enclumes selon un dessin. On pourra obtenir ainsi des effets de "vagues" ou de "plissé" différents des aspects "ligne" ou "quinconce" traditionnels.

## Revendications

1. Procédé de fabrication en continu d'un revêtement textile présentant une surface velours selon lequel on assure la solidarisation par fusion acoustique de fils à un substrat, l'un au moins de ces éléments étant thermoplastique, avec amenée du substrat dans une zone de soudage, alimentation des fils au substrat, formation de boucles sur les fils et fixation de la base des boucles de fils au substrat selon une implantation déterminée par la localisation de têtes de soudage, caractérisé en ce que l'alimentation des fils (1) au substrat (2) est assurée indépendamment de l'opération de soudage, et en ce que lesdits fils (1) sont soumis, avant ladite opération de soudage, à l'action de jets d'air comprimé destinés à la formation des boucles (16), l'air injecté étant chauffé.

2. Procédé selon la revendication 1, caractérisé en ce que l'action des jets d'air comprimé s'exerce indépendamment du processus de guidage des fils (1) vers le substrat (2).

3. Procédé selon la revendication 1, caractérisé en ce que l'action des jets d'air comprimé est liée au processus de guidage des fils (1) vers le substrat (2).

4. Procédé selon l'une des revendications 1 à 3, caractérisé en ce qu'il est prévu, immédiatement avant solidarisation de la base des boucles (16) et du substrat (2), une opération de découpe des fils (1) en synchronisation avec l'opération de soudage.

5. Dispositif pour la mise en oeuvre du procédé selon l'une quelconque des revendications 1 à 4, qui comporte des moyens pour amener le substrat dans la zone de soudage, des moyens d'alimentation et de guidage d'une nappe de fils jusqu'à ladite zone de soudage avec un canal pour le passage de chaque fil, un poste de soudage acoustique comprenant une sonotrode disposée à l'envers du substrat et des têtes de soudage disposées de l'autre côté du substrat, ainsi que des moyens d'excitation de cette sonotrode pour la faire vibrer à une fréquence acoustique apte à porter le matériau thermoplastique à sa température de fusion lorsqu'il passe entre ladite sonotrode et lesdites têtes de soudage, la position des têtes de soudage déterminant le point d'implantation sur le substrat des boucles de fil fourni par les moyens d'alimentation et de soudage, caractérisé en ce que les moyens pour conduire la nappe de fils (1) dans la zone de soudage sont indépendants des moyens de soudage (3,17), en ce qu'un dispositif d'injection pneumatique (14) est prévu a l'arrière des têtes de soudage (17) pour assurer la formation des boucles (16), le canal (20) de passage du fil (1) et le dispositif d'injection pneumatique étant réunis en un même élément injecteur (19) assurant la propulsion du fil (1) et la formation de la boucle (16), et en ce que des moyens sont prévus pour le chauffage de l'air injecté.

6. Dispositif selon la revendication 5, caractérisé en ce qu'un dispositif de coupe (24), animé d'un mouvement vertical alternatif, est disposé à la sortie du dispositif d'injection (14), en amont des têtes de soudage (17).

7. Dispositif selon la revendication 5 ou 6, caractérisé en ce que le positionnement vertical de chaque tête de soudage (17) est assuré par l'intermédiaire d'un ressort (13) qui la sollicite vers le bas, des moyens (15) étant prévus pour le déplacement vers le haut, dans le sens vertical, desdites têtes (17).

8. Dispositif selon la revendication 7, caractérisé en ce que le positionnement longitudinal des têtes de soudage (17) est assuré par engagement d'une extrémité du ressort (13) dans des encoches (18) ménagées dans les moyens de déplacement (15).

9. Dispositif selon la revendication 8, caractérisé en ce que le guidage latéral des têtes de soudage (17) est assuré par des cloisons (4).

10. Dispositif selon la revendication 7, caractérisé en ce que le guidage latéral des têtes de soudage (17) est réalisé au moyen de deux blocs complémentaires (37,38) présentant des évidements aptes à recevoir chacun la partie arrière (31) des enclumes de soudage (11).

11. Dispositif selon la revendication 10, caractérisé en ce qu'il est prévu, entre des moyens (32) destinés a assurer la pression de soudure et les enclumes de soudage (11), un dispositif amortisseur (33).

12. Dispositif selon l'une quelconque des revendications 5 à 11, caractérisé en ce que l'alimentation des fils (1) sous les têtes de soudage (17) se fait sensiblement tangentiellement au substrat (2).

13. Dispositif selon la revendication 12, caractérisé en ce que l'air suit une trajectoire rectiligne dans l'élément injecteur (19).

14. Dispositif selon l'une des revendications 5 à 13, caractérisé en ce qu'un élément tampon (27) est prévu pour obturer l'entrée du canal (20) d'amenée de fil dans l'élément injecteur (19) au moment où le dispositif de coupe (24) est en position basse.

15. Dispositif selon l'une des revendications 5 à 14, caractérisé en ce que les moyens prévus pour conduire le fil (1) dans la zone de soudure sont des moyens d'alimentation commandés par un rouleau d'entraînement (45) qui détermine la longueur de fil délivré, depuis un cantre, à chaque cycle de la machine.

16. Dispositif selon l'une des revendications 5 à 14, caractérisé en ce que l'avance du fil (1) à la zone de soudure est réalisée de façon discontinue par l'intermédiaire d'un arbre oscillant (56) recevant son mouvement par un excentrique relié au mouvement principal.

17. Dispositif selon la revendication 16, caractérisé en ce que des moyens de programmation sont prévus pour sélectionner l'avance de différents fils (1) introduits dans le dispositif de coupe et soudure.

**Claims**

1. A method for the continuous production of a textile covering having a pile-type surface, according to which threads are connected to a substrate by acoustic fusion, at least one of these elements is thermoplastic, the substrate is brought into a welding area, threads are supplied to the substrate, loops are formed in the threads and the thread loops are fixed to the substrate in accordance with an implantation determined by the location of welding heads, characterised in that the supply of threads (1) to the substrate (2) is ensured independently of the welding operation, and in that said threads (1) are subjected, before the welding operation, to the action of jets of compressed air intended to form the loops (16), the injected air being heated.

2. A method according to Claim 1, characterised in that the action of the compressed air jets is exerted independently of the process for guiding the threads (1) towards the substrate (2).

3. A method according to Claim 1, characterised in that the action of the compressed air jets is connected to the process for guiding the threads (1) towards the substrate (2).

4. A method according to one of Claims 1 to 3, characterised in that there is provided, immediately before the bases of the loops (16) are connected to the substrate (2), a cutting operation for the threads (1) synchronous with the welding operation.

5. A device for carrying out the method according to any one of Claims 1 to 4, which includes means for bringing the substrate into the welding area, means for supplying and guiding a lap of threads as far as the welding area with a channel for the passage of each thread, an acoustic welding station including an ultrasonic electrode on the reverse side of the substrate and welding heads disposed on the other side of the substrate, as well as means for exciting this ultrasonic electrode to cause it to vibrate at an acoustic frequency capable of bringing the thermoplastic material to its fusion temperature when it passes between said ultrasonic electrode and said welding heads, the position of the welding heads determining the point of implantation into the substrate of the thread loops supplied by the supply and welding means, characterised in that the means for conducting the lap of threads (1) into the welding area are independent of the welding means (3,17), in that a pneumatic injection device (14) is provided behind the welding heads (17) to ensure the formation of the loops (16), the channel (20) for the passage of the thread (1) and the pneumatic injection device being united in a single injection element (19) ensuring the propulsion of the thread (1) and the formation of the loop (16), and in that means are provided for heating the injected air.

6. A device according to Claim 5, characterised in that a cutting device (24) driven in a vertical reciprocating movement is disposed at the outlet of the injection device (14), upstream of the welding heads (17).

7. A device according to Claim 5 or 6, characterised in that the vertical positioning of each welding head (17) is ensured by means of a spring (13) urging it downwardly, means (15) being provided for the vertical upwards movement of said heads (17).

8. A device according to Claim 7, characterised in that the longitudinal positioning of the welding heads (17) is ensured by engagement of one end of the spring (13) in notches (18) formed in the displacement means (15).

9. A device according to Claim 8, characterised in that the lateral guiding of the welding heads (17) is ensured by partitions (4).

10. A device according to Claim 7, characterised in that the lateral guiding of the welding heads (17) is effected by means of two complementary blocks (37,38) having cavities each adapted to receive the rear portion (31) of the welding anvils (11).

11. A device according to Claim 10, characterised in that there is provided, between the means (32) intended to ensure the welding pressure and the welding anvils (11), a damping device (33).

12. A device according to any one of Claims 5 to 11, characterised in that the feeding of threads (1) beneath the welding heads (17) is effected substantially tangentially to the substrate (2).

13. A device according to Claim 12, characterised in that the air follows a rectilinear path in the injection element (19).

14. A device according to one of Claims 5 to 13, characterised in that a plug element (27) is provided to close the inlet to the channel (20) for bringing the thread into the injection element (19) at the moment when the cutting device (24) is in the low position.

15. A device according to one of Claims 5 to 14, characterised in that the means provided for conducting the thread (1) into the welding area are supply means controlled by a drive roller (45) which determines the length of thread supplied, from a creel, at each cycle of the machine.

16. A device according to one of Claims 5 to 14, characterised in that the advancement of the thread (1) to the welding area is effected in a discontinuous manner by means of an oscillating shaft (56) receiving its movement through an excentric connected to the main movement.

17. A device according to Claim 16, characterised in that programming means are provided for selecting the advancement of different threads (1) introduced into the cutting and welding device.

**Patentansprüche**

1. Verfahren zum kontinuierlichen Herstellen eines Textilbezuges mit einer Velour-Oberfläche, bei welchem die Fäden mittels Schallschmelzen auf einem Träger befestigt werden, wobei wenigstens eines dieser Elemente ein thermoplastisches Material ist, bei welchem ferner der Träger in eine Schweißzone gebracht, die Fäden dem Träger zugeführt, die Fädem in Schlingen geformt und die Basis der Fadenschlingen auf dem Träger gemäß einer durch die Anordnung der Schweißköpfe bestimmten Montageanordnung befestigt wird, dadurch **gekennzeichnet,** daß die Zuführung der Fäden zum Träger (2) unabhängig vom Schweißvorgang erfolgt, und daß diese Fäden (1) vor dem Schweißvorgang der Wirkung von Druckluftstrahlen ausgesetzt werden, welche dazu bestimmt sind, Schlingen (16) zu formen, wobei die eingeblasene Luft aufgeheizt ist.

2. Verfahren nach Anspruch 1, dadurch **gekennzeichnet,** daß die Wirkung der Druckluftstrahlen sich unabhängig vom Vorgang der Führung der Fäden (1) zum Träger (2) entfaltet.

3. Verfahren nach Anspruch 1, dadurch **gekennzeichnet,** daß die Wirkung der Druckluftstrahlen mit dem Vorgang der Führung der Fäden (1) zum Träger (2) verknüpft ist.

4. Verfahren nach einem der Ansprüche 1 bis 3, dadurch **gekennzeichnet,** daß ein unmittelbar vor der festen Verbindung der Basis der Schlingen (16) mit dem Träger (2) stattfindender Vorgang des Abschneidens der Fäden (1) synchron mit dem Schweißvorgang vorgesehen ist.

5. Einrichtung zur Durchführung des Verfahrens nach einem der Ansprüche 1 bis 4, welche Mittel zum Verbringen des Trägers in die Schweißzone aufweist, ferner Mittel zum Zuführen und Leiten einer Fadenbahn bis zu der genannten Schweißzone mit jeweils einem Kanal für den Druchtritt eines Fadens, eine Station zum Schallschweißen mit einer an der Unterseite des Trägers angeordneten Sonotrode und mit an der anderen Seite des Trägers angeordneten Schweißköpfen sowie mit Mitteln zum Anregen dieser Sonotrode derart, daß sie mit einer Schallfrequenz vibriert, die geeignet ist, das thermoplastische Material auf seine Schmelztemperatur zu bringen, wenn dieses zwischen dieser Sonotrode und den Schweißköpfen hindurch passiert, wobei die Position der Schweißköpfe den Befestigungspunkt der von den Zuführ- und Schweißmitteln gelieferten Fadenschlingen auf dem Träger bestimmt, dadurch **gekennzeichnet,** daß die Mittel zum Führen der Bahn von Fäden (1) in die Schweißzone unabhängig von den Schweißmitteln (3, 17) sind, daß hinter den Schweißköpfen (17) eine Einrichtung (14) zur Lufteinblasung vorgesehen ist, welche die Formung der Schlingen (16) bewirkt, wobei der Kanal (20) für die Passage des Fadens (1) und die Einrichtung zur Lufteinblasung in einem gemeinschaftlichen Injektorelement zusammengefaßt sind, welches die Beförderung des Fadens (1) und die Bildung der Schlinge (16) bewirkt, und daß Mittel zum Aufheizen der eingeblasenen Luft vorgesehen sind.

6. Einrichtung nach Anspruch 5 oder 6, dadurch **gekennzeichnet,** daß eine in einer vertikalen Aufund Abewegung angetriebene Schneideinrichtung (24) am Ausgang der Einblaseinrichtung (14) stromauf der Schweißköpfe (17) vorgesehen ist.

7. Einrichtung nach Anspruch 5 oder 6, dadurch **gekennzeichnet,** daß die vertikale Positionierung des jeweiligen Schweißkopfes (17) mittels einer Feder (13) bewirkt wird, die diesen nach unten vorspannt, wobei Mittel (15) zum Verstellen dieser Schweißköpfe (17) vertikal nach oben vorgesehen sind.

8. Einrichtung nach Anspruch 7, dadurch **gekennzeichnet,** daß die Längspositionierung der Schweißköpfe (17) durch einen Eingriff eines Endes der Feder (13) in Ausnehmungen (18) bewirkt wird, die in den Verstellmitteln (15) ausgebildet sind.

9. Einrichtung nach Anspruch 8, dadurch **gekennzeichnet,** daß die Seitenführung der Schweißköpfe (17) durch Zwischenwände (4) bewirkt wird.

10. Einrichtung nach Anspruch 7, dadurch **gekennzeichnet,** daß die Seitenführung der Schweißköpfe (17) mittels zweier komplementärer Blöcke (27, 28) bewirkt wird, die Ausnehmungen haben, welche jeweils den hinteren Bereich (31) der Schweißstempel (11) aufnehmen können.

11. Einrichtung nach Anspruch 10, dadurch **gekennzeichnet,** daß zwischen den Mitteln (32) zum Aufbringen des Schweißdruckes und den Schweißstempeln (11) jeweils eine Federeinrichtung (33) vorgesehen ist.

12. Einrichtung nach einem der Ansprüche 5 bis 11, dadurch **gekennzeichnet,** daß die Zuführung der Fäden (1) unter die Schweißköpfe (17) im wesentlichen tangential zum Träger (2) erfolgt.

13. Einrichtung nach Anspruch 12, dadurch **gekennzeichnet,** daß die Luft einer geraden Bahn im Injektorelement (19) folgt.

14. Einrichtung nach einem der Ansprüche 5 bis 13, dadurch **gekennzeichnet,** daß ein Stopfenelement (27) zum Verstopfen des Eingangs des Kanals (20) für das Zuführen des Fadens in das Injektorelement (19) in dem Augenblick, in welchem sich die Schneideinrichtung in ihrer unteren Position befindet, vorgesehen ist.

15. Einrichtung nach einem der Ansprüche 5 bis 14, dadurch **gekennzeichnet,** daß die Mittel zum Führen des Fadens (1) in die Schweißzone durch eine Einführeinrichtung gebildet sind, die von einer Antriebsrolle (45) gesteuert wird, welche die Länge des von einem Spulenrahmen aus angelieferten Fadens bei jedem Maschinenzyklus bestimmt.

16. Einrichtung nach einem der Ansprüche 5 bis 14, dadurch **gekennzeichnet,** daß die Vorschubbewegung des Fadens (1) zur Schweißzone diskontinuierlich mittels eines Schwingarmes (56) bewirkt wird, welcher seine Antriebsbewegung über einen mit dem Hauptantrieb verbundenen Exzenter erhält.

17. Einrichtung nach Anspruch 16, dadurch **gekennzeichnet,** daß eine Programmiereinrichtung zum Auswählen der Vorschubbewegung der verschiedenen in die Schneid- und Schweißeinrichtung eingeführten Fäden (1) vorgesehen ist.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

FIG.21

FIG.22

FIG.23

FIG.24

FIG.25

FIG.26

FIG.27

FIG. 28

FIG. 29

FIG. 30